# EUROPEAN PATENT APPLICATION

(11) **EP 1 577 983 A2**
(43) Date of publication of application: **21.09.2005**
(21) Application number: 05251643.2
(22) Date of filing: 17.03.2005
(51) Int. Cl.: H01R 13/518, B60R 16/02, H01R 9/24

(54) **Electrical junction box**

(30) Priority: 17.03.2004 JP 2004076551
(71) Applicant: Sumitomo Wiring Systems, Ltd., Mie, 510-8503 (JP)
(72) Inventor: Saito, Yukitaka, c/o Sumitomo Wiring Systems, Ltd., Yokkaichi-city, Mie, 510-8503 (JP); Isshiki, Yoshihiro, Sumitomo Wiring Systems, Ltd., Yokkaichi-city, Mie, 510-8503 (JP); Yamasaki, Noriyuki, Sumitomo Wiring Systems, Ltd., Yokkaichi-city, Mie, 510-8503 (JP); Sakai, Masao, c/o Toyota Jidosha Kabushiki Kaisha, Toyota-shi, Aichi-ken, 471-8571 (JP); Kaneko, Seiichi, Toyota Jidosha Kabushiki Kaisha, Toyota-shi, Aichi-ken, 471-8571 (JP); Minakata, Masato, Toyota Jidosha Kabushiki Kaisha, Toyota-shi, Aichi-ken, 471-8571 (JP)
(74) Representative: Paget, Hugh Charles Edward

(57) **Abstract**

An electrical junction box (10) comprises a casing (11, 12) and a connector housing socket (14, 15) providing a recess at an exterior of the casing (11, 12) and having a substantially rectangular cross-section, the connector housing socket (14, 15) being adapted for receipt of a mating connector in use of the junction box. An elongate terminal slot (14b, 15b) is provided in a bottom wall (14a, 15a) of the recess of the connector housing socket (14, 15). An internal circuit is located in the casing (14, 15), and the internal circuit is connected to a tab (22, 24) that projects through the terminal slot (14b, 15b). The length direction of the terminal slot (14b, 15b) is perpendicular to the elongation direction (Y) of the connector housing socket (14, 15).

## Description

### Field of the Invention

This invention relates to an electrical connection box and method of making a bus bar for use therein. In particular, the electrical junction box is for use in a motor vehicle, and has one or more external sockets for receiving a mating connector or connector containing terminals attached to wiring of the vehicle.

### Background Art

Prior art electrical junction boxes, for mounting on a motor vehicle, comprise an internal circuit including a flat bus bar, a vertical bus bar and/or a single core wire. The internal circuit is provided with tabs that project into a connector housing providing a socket at the exterior of a casing for receiving the mating connector. The internal circuit is connected to an external circuit through connection between the tabs and a connector arrangement.

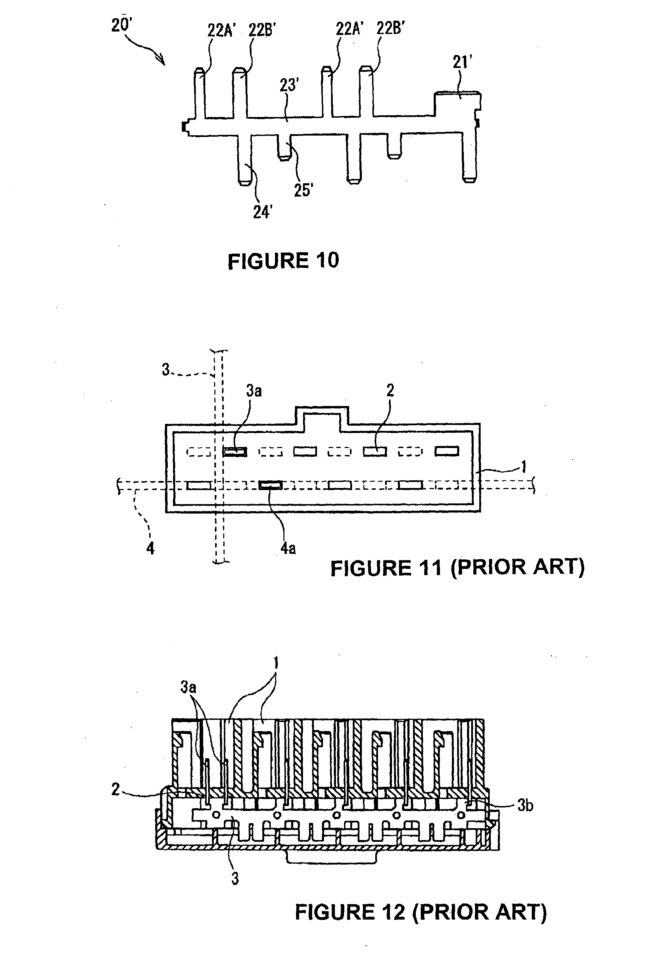

The present applicants have proposed many such electrical junction boxes in Japanese Laid-open Patent Application No. 7-250415 (1995) and the like. Figures 11 and 12 of the present application illustrate a portion of such a known electrical junction box. In a connector housing socket 1 of the electrical junction box, as shown in Figure 11, the elongation direction of terminal slots 2 formed in a bottom wall of the connector housing socket 1 is aligned with the elongation direction of the connector housing socket 1. Consequently, the length direction of a tab of an internal circuit that passes through the terminal slot 2 is also aligned with the elongation direction of the connector housing socket 1.

There are problems with prior art electrical junction boxes that have an internal circuit which includes a vertical bus bar comprising tabs. (The vertical bus bar is so called because it has a main body portion which lies in a plane which extends upwardly and downwardly (vertically) relative to upper and lower case members of the electrical junction box.) For example, as shown in Figure 11, if the elongation direction of the vertical bus bar 3 intersects the elongation direction of the connector housing socket 1 perpendicularly, tabs 3a, projecting from the vertical bus bar 3, must twist at an angle of 90 degrees in a horizontal direction, to align with the terminal slots 2. This increases the number of production steps of the bus bar 3. Furthermore, it requires a bending margin 3b of the tab 3a, as shown in Figure 12. Consequently, the percentage of a conductive metal plate available for forming the vertical bus bar is less. Furthermore, the electrical junction box must increase in size and height.

Nevertheless, if the elongation direction of a vertical bus bar 4 extends in parallel with the elongation direction of the connector housing socket 1, as shown in Figure 11, it is not necessary to twist a tab 4a, thus making it easier to form the vertical bus bar 4. However, with this orientation, the connector housing socket 1 cannot bridge (overlie) many different vertical bus bars 4; it is impossible to connect the tabs 4a that extend from the many different vertical bus bars 4 to terminals of a connector fitted in the connector housing socket 1. This restricts the flexibility in the design of the electrical junction box circuits.

### Summary of the Invention

In view of the above, an object of the present invention is to enhance flexibility in the design of circuits of an electrical junction box.

The present invention in a first aspect provides an electrical connection box comprising:
a casing;
a connector housing socket, said connector housing socket providing a recess at an exterior of said casing and having a substantially rectangular cross-section, said connector housing socket being adapted for receipt of a mating connector in use of the junction box;
an elongate terminal slot, said terminal slot being provided in a bottom wall of said recess of said connector housing socket;
an internal circuit, said internal circuit being located in said casing, and said internal circuit being connected to a tab that projects through said terminal slot;
characterised in that:
the length direction of said terminal slot is perpendicular to the elongation direction of said connector housing socket.

The elongation direction of the connector housing socket is defined herein as the direction substantially parallel to the long sides of the substantially rectangular cross-section of the connector housing socket. The direction perpendicular to the elongation direction of the connector housing socket should be construed accordingly, but it is also referred to herein as the 'short side' direction of the connector housing. The elongation (length) direction of the terminal slot is defined herein as the direction substantially parallel with the longest side edge of the terminal slot; this elongation direction of the slot corresponds to the length direction of a tab inserted into the slot.

In this specification, the orientation words "upper", "lower", "upwards", "downwards", "vertical", "laterally", "sideways" etc. are used for convenience of description of the electrical junction box. In actual use, the box may be arranged in any suitable orientation.

Preferably, the electrical junction box further comprises a mating connector, the mating connector being located in the connector housing socket, the mating connector comprising a terminal and a terminal chamber, the terminal being located in the terminal chamber. Preferably the mating connector has a substantially rectangular cross-section so that it can be received securely in the connector housing socket. Preferably the terminal of the mating connector is made in one-piece by folding metal sheet, and preferably the terminal has a slit shaped to receive a corresponding tab of the electrical junction box. Preferably the length direction of the slit, i.e. the direction substantially parallel with the longest side edge of the slit, is perpendicular to the elongation direction of the mating connector.

Preferably, when the mating connector is fitted into the connector housing socket, the tab of the internal circuit, that passes through the terminal slot, is connected to the terminal of the mating connector.

Preferably the connector housing socket comprises a plurality of terminal slots. Preferably terminal slots are juxtaposed and spaced from one another along a row, the row extending in the short side direction of the connector housing socket.

Preferably the connector housing comprises a plurality of rows of terminal slots, the rows juxtaposed in the elongation direction of the connector housing socket.

Preferably, corresponding slots of adjacent rows are shifted with respect to one another in the short side direction of the connector housing socket.

Preferably a plurality of tabs extend from a bus bar and project through respective terminal slots. Preferably the bus bar is a vertical bus bar, comprising an elongated main base portion, with a plurality of tabs extending from the upper and/or lower edges of the base portion. The elongation direction of the vertical bus bar is defined herein as the elongation direction of the main base portion.

Preferably the internal circuit comprises a plurality of vertical bus bars juxtaposed in vertical planes in said casing in the elongated direction of the connector housing socket, each of the vertical bus bars being elongated in the direction perpendicular to the elongation direction of the connector housing socket.

The internal circuit of an electrical junction box may be comprise one or more flat bus bars, single-core wires, and/or the like, in addition to the vertical bus bars. The flat bus bars are so called because they each have a main portion which lies in a plane which extends laterally or sideways (i.e. flat) relative to upper and lower casing members of the casing.

Preferably, a plurality of chambers for containing vertical bus bars (vertical bus bar-containing chambers) are juxtaposed in the casing. Preferably, a plurality of the juxtaposed vertical bus bars are secured, respectively, to the plurality of vertical bus bar-containing chambers.

Preferably, when a plurality of vertical bus bars are juxtaposed in vertical planes in said casing, the connector housing socket bridges (overlies) the vertical bus bars, the bridging direction of the connector housing socket (i.e. the direction in which the connector housing socket overlies a plurality of vertical bus bars) corresponding to the elongation direction of the connector housing socket.

In prior art electrical junction boxes, where the bridging direction of the connector housing socket corresponds to the elongated direction of the connector housing socket, tabs extending from the vertical bus bars are twisted or bent at an angle of 90 degrees. This is so that the length direction of the tabs is aligned with the length direction of the terminal slots, the terminal slots being aligned with the elongation direction of the connector housing socket.

In the present invention, the bridging direction of the connector housing is preferably the elongation direction of the connector housing, but no twisting or bending of the tabs is necessary, since the length direction of the terminal slots is in the short side direction of the connector housing. Accordingly, the vertical bus bar can be formed e.g. by punching out a conductive metal plate, with any substantial bending work eliminated. Therefore, the vertical bus bars of the present invention can be produced easily and at a low cost.

In prior art examples of electrical junction boxes, where the bridging direction of the connector housing sockets corresponds to the short side direction of the connector housing sockets, no twisting or bending of the tabs extending from the vertical bus bars is necessary. However, since the bridging direction of the connector housing socket is in the short side direction of the connector housing socket, the connector housing can not bridge as many vertical bus bars.

In the present invention, the reason for having the bridging direction of the connector housing socket in the short side direction of the connector housing socket is negated, since no bending of the tabs is necessary when the bridging direction is in the elongated direction of the connector housing sockets. Accordingly, the connector housing can bridge many vertical bus bars without problem. Also, with this configuration, the size of the connector housing in the elongated direction need not be as large as in the prior art configuration. Accordingly, the electrical junction box can facilitate more connections in the same amount of space.

Preferably, a plurality of connector housing sockets are juxtaposed in the elongation direction of each of the plurality of vertical bus bars.

Preferably, tabs spaced away from one another and extending from the main base portions of the vertical bus bars pass through the terminal slots in each connector housing socket juxtaposed in the elongation direction of the vertical bus bars. Preferably, terminals of a plurality of mating connectors fitted in the connector housing sockets are connected to one another via respective vertical bus bars.

According to the above construction, since tabs spaced away from one another on each vertical bus bar can pass through the terminal slots in more than one connector housing socket, it is possible to connect the terminals of different mating connectors, received in the respective connector housing sockets, via the vertical bus bar. If a flat bus bar were instead used to connect the terminals of the connectors, the internal circuit would become complicated and efficiency in the arrangement of the circuit would be lowered. However, according to the above construction, a simple structure can connect the terminals of the mating connectors.

The electrical junction box may comprise one or more connector housing sockets disposed at upper and/or lower sides of the vertical bus bars. Since tabs can extend from the upper and lower edges of the main base portion of the vertical bus bars, as discussed above, the vertical bus bar can joint the terminals of mating connectors fitted in connector housing sockets disposed at the upper and lower sides of the vertical bus bar, as well as the terminals of the mating connectors fitted in the connector housings on one side only.

According to the above construction, since corresponding terminal slots of adjacent rows may be shifted with respect to one another in the short side direction of the respective connector housing sockets, it is possible to arrange the terminals of the mating connector to be connected to the tabs at a narrow pitch, and to make a high density of junctions (connections) between the tabs of the vertical bus bars and the terminals of the mating connector. Also, since the corresponding tabs of adjacent vertical bus bars are shifted in the elongated direction of the vertical bus bars, in accordance with the shifted positions of the terminal slots, the positions of the tabs can be shifted similarly when multiple bus bars are formed from a single conductive metal plate. Therefore, the percentage of the conductive metal plate available to form bus bars can be increased.

Preferably, the vertical bus bars include narrow tabs for low current and wide tabs for high current. The narrow tabs are smaller in the length direction than the wide tabs. Narrow tabs and wide tabs are preferably both disposed on the upper and/or lower edges of the main base portion of the juxtaposed vertical bus bars, the tabs being juxtaposed and spaced in the elongated direction of the vertical bus bars. The terminal slots for receiving the narrow tabs are preferably disposed at a small pitch on one side of the bottom wall of the connector housing, whilst the terminal slots for receiving the wide tabs are preferably disposed at a greater pitch on the opposite side of the bottom wall of the connector housing socket.

According to the above construction, since the tabs for low current can be made narrow, with pitch set to be small, it is possible to shorten the lengths of the vertical bus bar and the short side direction of the connector containing-section, thereby permitting a reduction in size of the electrical junction box.

Preferably, one or more securing elements are provided on the upper and/or lower edges of the main base portion of the vertical bus bars. The vertical bus bars can be fixed to the casing by the securing elements. Preferably the securing elements can be pushed and received into complementary recesses of the casing. Therefore, it may be possible to steadily receive and fix the vertical bus bars in respective vertical bus bar containing chambers during construction of the electrical junction box. For example, where the casing includes upper and lower casing members, and the upper casing member is joined to the lower casing member after the vertical bus bars are received in vertical bus bar containing chambers of the lower casing member, it is possible for the tabs of the vertical bus bars to pass easily through respective terminal slots of connector housing sockets in the upper casing member, since the vertical bus bars can be held firmly in position in the vertical bus bar containing chambers by the securing elements.

If the securing elements are fixed at points between connector housings, or at positions corresponding to a hood of the connector housing, it is possible to more effectively utilize space.

According to a second aspect of the invention, a method for forming a vertical bus bars for use in an electrical connection box of the first aspect of the invention is provided, comprising the steps of:
punching a metal plate to form a plurality of juxtaposed bus bars, each bus bar being coupled at its ends respectively to first and second carrier portions formed from said metal plate, corresponding tabs of adjacent bus bars being offset in the elongation direction of said bus bars; and
removing each said bus bar from said carrier portions.

Preferably, corresponding tabs of the vertical bus bars are shifted between adjacent vertical bus bars in the elongation direction of the vertical bus bars.

Since corresponding tabs of adjacent vertical bus bars may be shifted, it is possible to increase an available percentage of the conductive metal plate that forms the vertical bus bars, e.g. if the tabs of one vertical bus bar are disposed in the spaces between tabs of the adjacent vertical bus bar.

Preferably, each end of the vertical bus bars is coupled, through a respective thin notched-portion, or scored portion, to the respective carrier portion. Preferably the score of at least one of the scored portions is provided on a straight line.

Preferably the method further comprises the steps of:
inserting the first carrier portion into a groove in a cutting tool;
tilting said bus bar, to separate the bus bar from the first carrier portion;
inserting the second carrier portion into the groove (66); and
tilting the bus bar (20), to separate said bus bar from the second carrier portion.

According to the above method, since the carrier portions couple the opposite ends of the vertical bus bars to each other, the carrier portions can protect the vertical bus bars from external interferences during transportation etc., and can allow for easily handling of the vertical bus bars.

Since removal of the vertical bus bar from the carrier portions can be carried out merely by tilting the vertical bus bar, e.g. by a worker, an apparatus such as a press machine is not required, and production costs may be lowered.

### Brief Description of the Drawings

Embodiments of the present invention will be described by way of non-limitative example, referring to the drawings. In the drawings: -
Figure 1 is an exploded perspective view of a first embodiment of an electrical connection box in accordance with the present invention.
Figure 2A is a plan view of the electrical junction box of Figure 1, and Figure 2B is a bottom view of the electrical junction box of Figure 1.
Figure 3 is a sectional view of the electrical junction box of Figure 1, in a vertical plane.
Figure 4 is a plan view of a connector to be fitted in a connector housing socket of the electrical junction box of Figure 1.
Figures 5A and 5B are front elevation views of vertical bus bars used in the electrical junction box of Figure 1.
Figure 6 is a sectional view of vertical bus bars juxtaposed in a casing of the electrical junction box of Figure 1.
Figure 7 is a front elevation view of the vertical bus bars coupled to one another by carrier portions.
Figures 8A and 8B are explanatory views, illustrating a method for removing the vertical bus bars from the carrier portions of Figure 7.
Figure 9 is a plan view of a second embodiment of an electrical connection box, in accordance with the present invention.
Figure 10 is a front elevation view of a vertical bus bar of the electrical junction box of Figure 9.
Figure 11 is a plan view of a connector housing socket of a known electrical junction box.
Figure 12 is a sectional view of the known electrical junction box of Figure 11, for illustrating problems encountered with the known electrical junction box of Figure 11.

### Detailed Description of the Preferred Embodiments

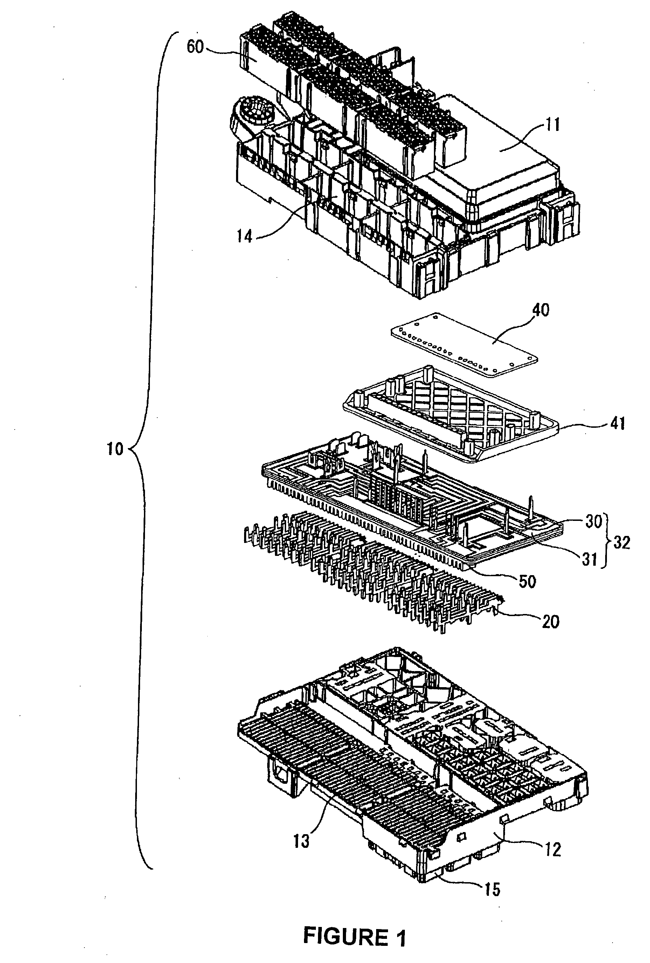

Figures 1 to 8 show a first embodiment of an electrical junction box in accordance with the present invention. The electrical junction box 10 has a casing including an upper casing member 11 and a lower casing member 12, both formed of moulded plastics material. An internal circuit is accommodated in the casing. The internal circuit includes vertical bus bars 20, a lamination body 32 in which flat bus bars 30 and insulation plates 31 are laminated alternately, and a printed circuit board 40.

The vertical buss bars 20 are so called because they each have a main base portion 23 which lies in a place which extends upwardly and downwardly (vertically) relative to the upper and lower casing members 11, 12. The flat bus bars 30 are so called because they each have a main portion which lies in a place which extends laterally or sideways (i.e. flat) relative to the upper and lower casing members 11, 12.

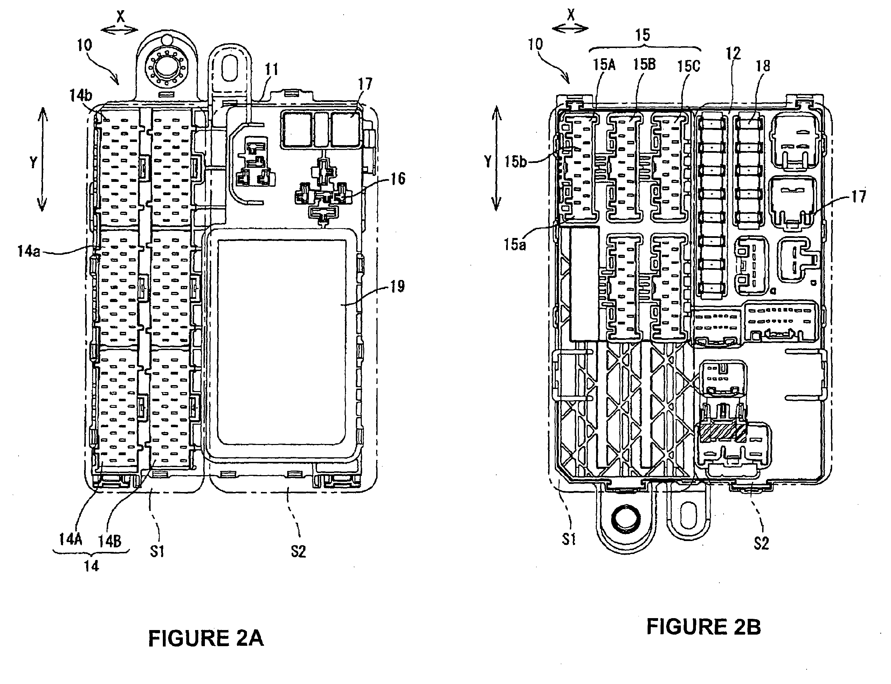

The electrical junction box 10 is divided laterally into a first half side, which is an arrangement area S1 for the vertical bus bars 20 (the area enclosed by an alternate long and short dash line in Figures 2A and 2B) in which a plurality of the vertical bus bars 20 are juxtaposed, and a second half side, which is an arrangement area S2 for flat bus bars (an area enclosed by an alternate long and short two-dashes line in Figures 2A and 2B) in which the lamination body 32 including the flat bus bars 30 and insulation plates 31 are disposed.

A plurality of rectangular connector housing sockets 14, 15 provide respective recesses at the exteriors of the upper and lower casing members 11, 12 of the casing, in the arrangement area S1. Elongate terminal slots 14b, 15b are formed in bottom walls 14a, 15a of the recesses of the sockets 14, 15. The length direction X of the terminal slots 14b, 15b is perpendicular to the elongation direction Y of the sockets 14, 15. The slots 14b, 15b are spaced from one another in rows, each row extending in a direction perpendicular to the elongation direction Y of the sockets 14, 15, corresponding slots 14b, 15b of adjacent rows being offset with respect to one another in the direction perpendicular to the elongation direction Y.

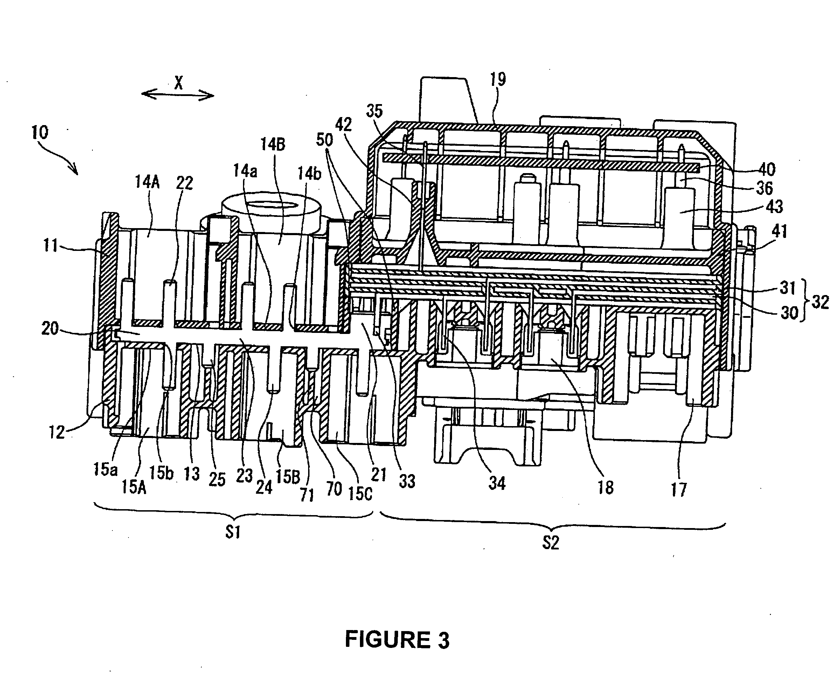

As shown in Figures 1 and 3, a plurality of vertical bus bar containing-chambers 13 are provided in the arrangement area S1 for the vertical bus bars 20 in the lower casing member 12. The chambers 13 extend from the boundary between the arrangement area S1 and the arrangement area S2 to the other side of the arrangement area S1. A main base portion 23 of each vertical bus bar 20 is pushed into and thereby secured in the respective chamber 13.

A plurality of connector housing sockets 14, 15 (14A, 14B, 15A, 15B, 15C) are juxtaposed in the elongation direction of the vertical bus bars 20. The direction in which the sockets 14, 15 bridge the plurality of vertical bus bars 20 is the direction Y of the long sides of the sockets 14, 15 (i.e. the elongation direction Y of the sockets 14, 15) while the elongation direction of the vertical bus bars 20 is the direction of the short side direction of the sockets 14 and 15. Therefore, the elongation direction of the vertical bus bars 20 is perpendicular to the elongation direction Y of the sockets 14, 15 and accords with the length direction X of the terminal slots 14b, 15b.

As shown in Figure 3, tabs 22, 24 extending from the vertical bus bars 20 pass through the terminal slots 14b, 15b and project into the respective recesses provided by the connector housing sockets 14, 15. Thus, since the length direction X of the terminal slots 14b and 15b, the length direction of the tabs 22 and 24, and the elongation direction of the vertical bus bars correspond with one another, the tabs 22, 24 can be provided on the vertical bus bar 20 without being bent.

As shown in Figure 3, tabs 22 and tabs 24 extend from each vertical bus bar 20 and project into the connector housing sockets 14A, 14B, 15A to 15C in plural rows. Two tabs 22 extend from each vertical bus bar 20 and project into the same connector housing socket 14A and 14B.

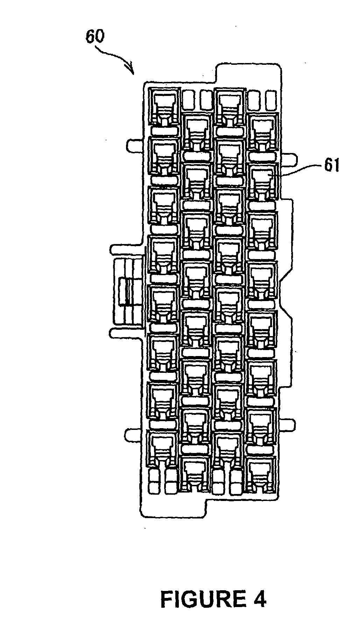

As shown in Figure 4, terminal containing-chambers 61 are provided in a staggered manner in rows in the connector 60 which is fitted into the connector housing socket 14. The terminal containing-chambers 61 house electrical terminals which engage the tab 22 that projects into the corresponding connector housing socket 14.

Each terminal of the mating connector is made in one-piece by folding metal sheet, and the terminal has a slit shaped to receive the corresponding tab of the electrical connection box. These terminals are joined to wires of for example a wiring harness of a motor vehicle. Such terminals are known in the art, and need not be described here in detail. In this invention, the slit of the terminal is aligned with the length direction of the tab of the electrical junction box, and is therefore perpendicular to the elongation direction of the mating connector. Therefore, terminals in the chamber 61 in the connector 60 are positioned with slits in a direction corresponding to that of the tab 22 that project into the socket 14 in the upper casing member 11.

Thus, as mentioned the length direction of the tabs 22 are perpendicular to the elongation direction of the rectangular connector housing socket 14. However, the tabs 22 extend from the base portion 23 of the vertical bus bar 20 and are not bent at an angle of 90 degrees. The slit direction of the mating terminal in the chamber 61 of the connector 60 is also positioned perpendicular to the elongation direction of the connector housing socket 14. Since the connector to be fitted in the connector housing socket 15 in the lower casing member 12 has the same structure as the connector 60 in the upper casing member 11, discussed above, a detailed explanation will be omitted here.

As described above, a plurality of tabs 22 are spaced away from one another and extend from each vertical bus bar 20 into the respective recesses provided by the juxtaposed connector housing sockets 14A, 14B (15A, 15B, 15C) in the arrangement area S1. Accordingly, the connectors 60 are fixed via the vertical bus bars 20 to the sockets 14A, 14B (15A, 15B, 15C), respectively.

In each socket 14, the terminal slots 14b are provided with their length direction perpendicular to the elongation direction of the socket 14, as described above. Tabs 22 extending from each vertical bus bar 20 pass through the respective slots 14b. Thus, terminals in each connector 60 are connected via tabs 14b of the same vertical bus bar 20.

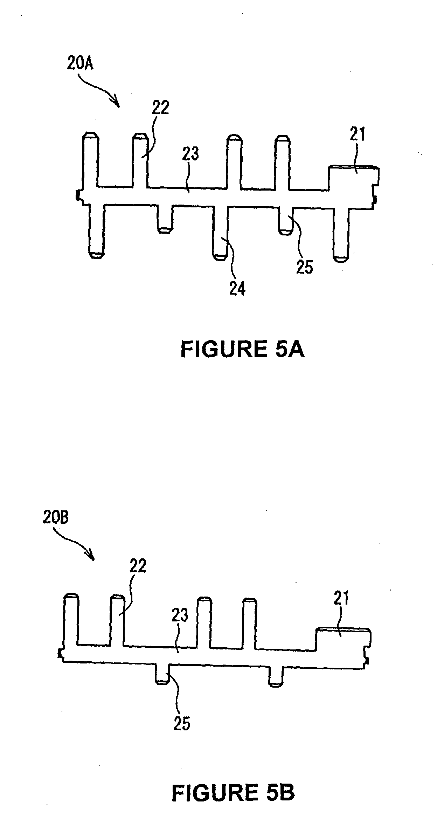

Two types of vertical bus bar 20 are provided, including a first vertical bus bar 20A, shown in Figure 5A, and a second vertical bus bar 20B, shown in Figure 5B. The first vertical bus bar 20A includes a plurality of tabs 22, 24 that are spaced away from one another and disposed at both the upper and lower edges of the base portion 23. The second vertical bus bar 20B includes a plurality of tabs 22 that are spaced away from one another and disposed at only the upper edge of the base portion 23.

The first and second vertical bus bars 20A and 20B each include securing elements 25 that extend e.g. downward from the lower edge of the base portion 23 and secures the bus bars 20A and 20B to the lower casing member 12.

The elements 25 may be provided on the upper edge or both upper and lower edges of the base portion 23.

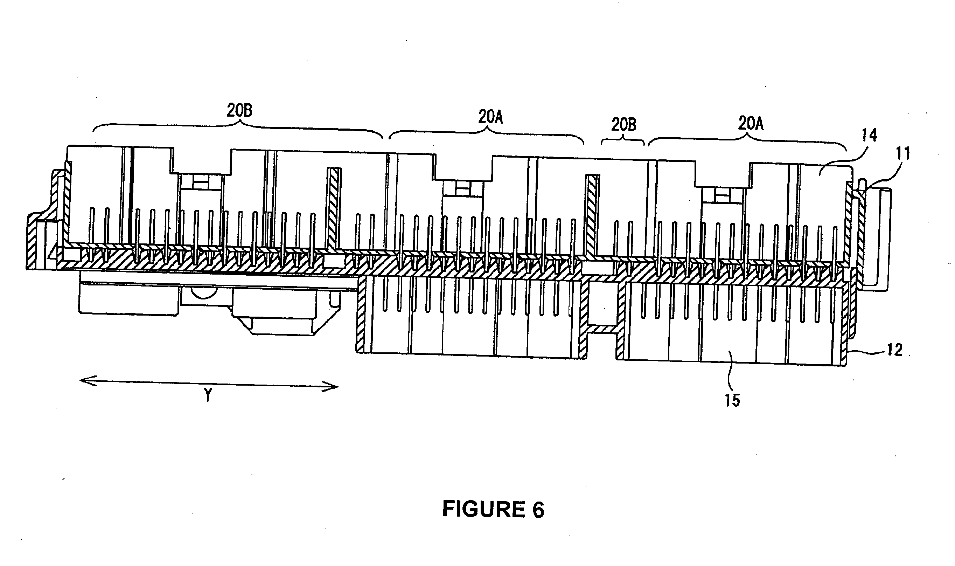

As shown in Figures 3 and 6, the first vertical bus bar 20A includes tabs 22 that extend upward from the base portion 23 and project into the connector housing socket 14 in the upper casing member 11, whilst the second vertical bus bar 20B includes tabs 24 that extend downward from the base portion 23 and project into the socket 15 in the lower casing member 12.

The second vertical bus bar 20B is shown in Figure 6 with tabs 22, that extend upwards from the base portion 23, disposed in the recess provided by the socket 14 in the upper casing member 11. The second vertical bus bar 20B may be disposed at a location where no socket 15 is provided in the lower casing member 12, or at a location opposing a hood.

As shown in Figure 3, the lower casing member 12 is provided with clamping grooves 70 provided between the connector housing sockets 15A, 15B, 15C that are juxtaposed in the elongation direction of the vertical bus bars 20. The clamping grooves 70 receive and clamp the securing elements 25, respectively, that extend from the lower edges of the base portion 23 of the vertical bus bars 20. The clamping grooves 70 have a bottom wall with a rib 71 extending upwardly therefrom into a chamber 13. When the distal ends of the securing elements 25 of each of the vertical bus bars 20 are pushed, respectively, into the clamping grooves 70, they contact the distal ends of the ribs 71, and the vertical bus bars 20 are secured in the chambers 13 in the lower casing member 12.

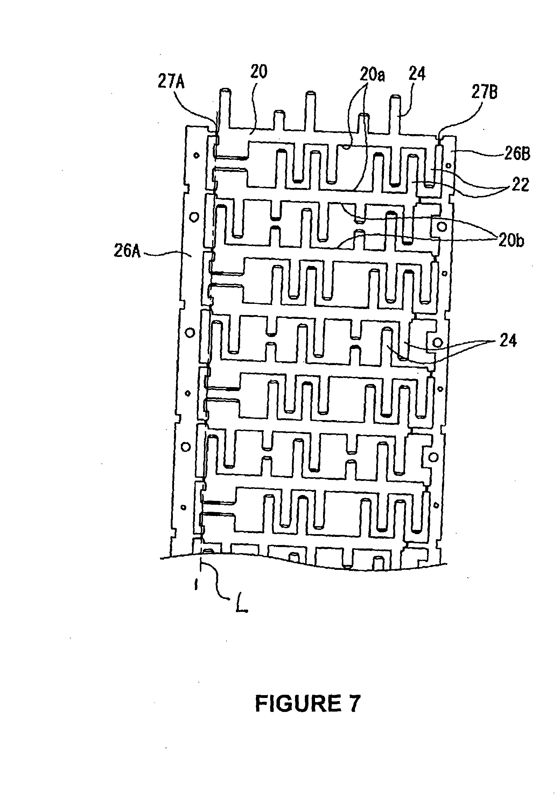

As shown in Figure 7, vertical bus bars 20 are formed by punching out a conductive metal plate. The vertical bus bars 20 are juxtaposed with respect to each other and are connected to each other via two carrier portions 26 (26a, 26B), each provided at respective ends of each bus bar 20. A respective thin (0.3 to 0.4 mm in thickness) notched or scored portion 27 (27A and 27B) is provided in a coupling portion situated between the carrier portions 26 and each end of the vertical bus bar 20. A first scored portion 27A has a score provided in a strait line L.

The vertical bus bars 20 connected by the carriers 26 are arranged between the carrier portions 26 in the same order as they are arranged when located in the lower casing member 12. The adjacent vertical bus bars 20 are arranged so that the respective upper and lower edges of the bus bars 20 are opposed to each other. That is, an upper edge 20a of each vertical bus bar 20 is opposed to the upper edge 20a of an adjacent vertical bus bar 20 on one side, whilst a lower edge 20b of each vertical bus bar 20 is opposed to a lower edge 20b of an adjacent vertical bus bar 20 on the other side.

Since the terminal slots 14b, 15b of adjacent rows of the connector housing sockets 14, 15 are staggered as described above, the tabs 22 and 24 of the vertical bus bars 20 arranged between the carrier portions 26 are staggered correspondingly. Consequently, the tabs 22, 24 of the adjacent vertical bus bars 20 are not directly opposed to each other but are shifted in the elongation direction of the vertical bus bars 20. Thus, when the adjacent vertical bus bars 20 are arranged on the metal plate as described above, one tab of one bus bar is disposed between two tabs of the adjacent bus bar, as shown in Figure 7, thereby increasing the percentage of the material of the conductive metal plate available to form vertical bus bars.

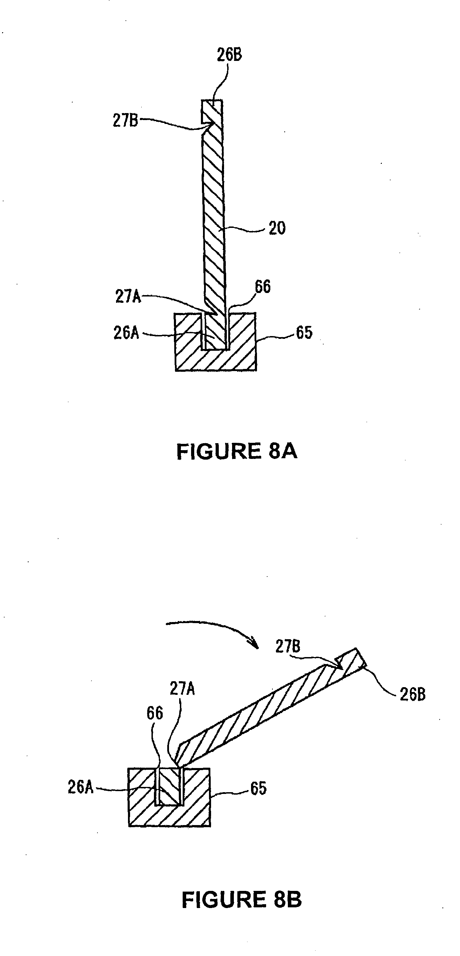

The vertical bus bar 20 is removed from the carrier portions 26 by utilizing a vertical bus bar cutting-tool 65 having a straight carrier portion insertion groove 66. As shown in Figure 8, the insertion groove 66 has a width large enough to receive the carrier portions 26, and a depth sized so as to expose the thin scored portion 27 of a carrier portion 26 inserted into the groove 66.

A process for removing one of the vertical bus bars 20 from the carrier portions 26, using the cutting-tool 65, includes a first step of inserting a carrier portion 26A, adjacent the scored portion 27A having the score in the straight line, into the insertion groove 66, as shown in Figure 8A.

Then, the vertical bus bars 20 are tilted, e.g. downward, as shown in Figure 8B, and all of the vertical bus bars 20 are removed together from the carrier portion 26A at the scored portion 27A.

Then, the other carrier portion 26B is inserted into the insertion groove 66 and a desired bus bar 20 is tilted , e.g. downward individually, thereby the vertical bus bar 20 is removed from the carrier 26B at the scored portion 27B.

Vertical bus bars 20 removed from the carrier portions 26A, 26B using the process above are pushed into and secured to the chamber 13 in the lower casing member 12.

The thin scored portion 27B may also be provided with score in a straight line (as scored portion 27A), such that all or several vertical bus bars 20 can be tilted, e.g. downward, to remove them from the carrier portions in unison.

The numerous vertical bus bars 20 are pushed into the chambers 13 with their first ends being aligned at the side of the arrangement area S2. Their second ends are at the opposite side of the area S1. As shown in Figure 3, at the first end of each bar 20, a bus bar connection tab 21 extends upward and makes a press contact with a tuning fork terminal 33 of at least one of the flat bus bars 30. A press contact here means a pressure contact in which electrical contact is maintained by pressure exerted by the contacting parts.

On the other hand, each flat bus bar 30 is positioned in the arrangement area S2 and an end portion of the flat bus bar 30 is disposed at the boundary portion between the arrangement area S2 and the arrangement area S1. The tuning fork terminal 33 is bent downward from an end of the flat bus bar 30 to engage the bus bar connection tab 21 of the vertical bus bar 20. The terminal 33 is disposed perpendicular to the bus bar connection tab 21 of the vertical bus bar 20. When a lamination body 32 is accommodated in the lower casing member 12, a given connection tab 21 is inserted into and secured in the slit in the terminal 33, as shown in Figure 3.

The tuning fork terminals 33 of the flat bus bars 30 are staggered laterally in the arrangement area S2 so that the vertical bus bars 20 can be arranged at a narrow pitch, i.e. close together.

The tuning fork terminals 33 of the flat bus bars 30 are previously covered with a protection resin block 50 to protect them before they are brought into press contact with the connection tabs 21 of the vertical bus bars 20. The protection resin block 50 is provided with chambers containing the terminals 33, staggered in the same manner as the terminal 33. The connection tabs 21 of the vertical bus bar 20 are inserted into the lower ends of the chambers and are brought into press contact with the terminals 33.

On the other hand, terminal portions 34 are formed on each flat bus bar 30 by bending the given portions of the bus bar 30 upward or downward. The terminal portions 34 project for example into a relay housing socket 16 or a fuse housing socket 17 in the upper casing member 11, or they project for example into a connector housing socket 17 or a fuse housing socket 18 in the lower casing member 12 (see Figures 2A and 2B).

As shown in Figure 3, a printed board containing-section 19 is formed by a raised upper wall portion of the upper casing member 11, at a given position of the upper casing member 11. A printed board 40 (pcb) is accommodated in this section 19 with an insulation plate 41 interposed in the casing between the lamination body 32 and the printed board 40. Elongate conductor connection tabs 35 extend upward from at least one of the flat bus bars 30. The conductor connection tabs 35 pass through a raised connection tab support section 42 of the insulation plate 41 and the tabs are connected to conductors of the printed board 40 disposed above in the section 19 by means of soldering. The printed board 40 is supported at a given height in the section 19 by means of soldering the printed board 40 to board securing-tabs 36 that extend from the flat bus bar 30 and pass through securing tab supports 43.

In the above discussed construction, the length direction X of the terminal slots 14b, 15b in the connector housing sockets 14, 15 is perpendicular to the elongation direction Y of the sockets 14 and 15, and the length direction of the terminal slits of the mating connector 60 is perpendicular to the elongation direction of the mating connector 60. Thus, the length direction of the terminal slots 14b, 15b correspond to the length direction of the terminal slits of the mating connector 60. When the mating connector 60 is fitted into a respective recess provided by the connector containing-sections 14, 15, the tabs 22, 24 of the internal circuit pass through the slots 14b, 15b and are coupled to the terminals of the mating connector 60.

The elongation direction Y of the connector housing sockets 14, 15 is perpendicular to the length direction X of the terminal slots 14b, 15b and the vertical bus bars 20 extend in a direction perpendicular to the elongation direction Y of the sockets 14, 15. Consequently, the tabs 22, 24 extend from the vertical bus bar 20 without needing to be bent, and thus any bending step, after a step of punching out the conductive metal plate, can be omitted. The vertical bus bars 20 can be produced easily at low cost. In addition, since the connector housing socket 14, 15 bridge (overlie) numerous vertical bus bars 20, it is possible to connect numerous vertical bus bars 20 to a single connector 60 fitted in a respective recess provided by the connector hosing sockets 14, 15, thereby enhancing flexibility in design of circuits.

A tab formed by bending a distal end of a flat bus bar, or a tab crimped on a single core wire, may pass through a respective terminal slot to project into the connector containing-section.

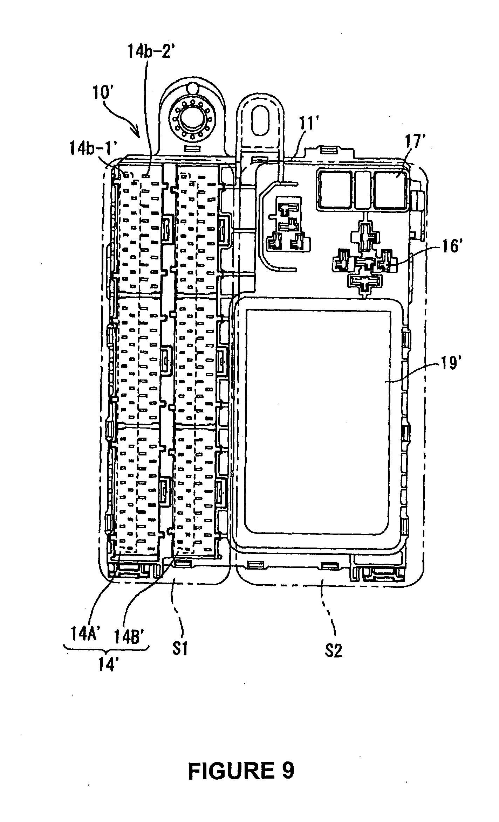

Figures 9 and 10 show a second embodiment of an electrical junction box in accordance with the present invention. A vertical bus bar 20' includes narrow tabs 22A' for low current and wide tabs 22B' for high current. The terms 'narrow' and 'wide' are used to describe the tabs 22A' and 22B' relative to each other, i.e. the narrow tab is shorter in its length direction than the wide tab in its length direction. The vertical bus bars 20' are juxtaposed so that the tabs 22A' and 22B' of the respective bus bars are disposed on the same sides of sockets 14'. The narrow tabs 22A' are formed on the vertical bus bar 20' such that they project through terminal slots 14b-1 into a left side area (area enclosed by dashed line in Figure 9) of a sockets 14', whilst wide tabs 22B' are formed on the vertical bus bar 20' such that they project through terminal slots 14b-2' into a right side area of the sockets 14'. The corresponding narrow tabs 22A' of adjacent vertical bus bars are arranged in a staggered manner, and a pitch of the narrow tabs 22A' is set to be smaller than the pitch of wide tabs 22B'.

Terminal slots 14b-1' in the socket 14' are shorter in the length direction, in accordance with the shape of the narrow tab 22A', in order to pass the narrow tab 22A', than terminal slots 14b-2', in the length direction, which are shaped in accordance with the wide tabs 22B', in order to pass the wide tabs 22B'.

Also, a pitch of the terminal slots 14b-1' is set to be smaller than the pitch of the terminal slots 14b-2'.

In the above described construction, it is possible to make the short side of the connector housing sockets smaller and to downsize the electrical junction box 10' accordingly, since the length of the tabs can be changed in accordance with the amount of current they are intended to carry. The tabs 22A' for low current can be narrowed, a pitch of the tab 22A' can be reduced, and thus a short side of the socket 14' can be smaller.

Since the narrow tabs 22A' and the wide tabs 22B' are disposed on the same side of the vertical bus bar 20', in the elongation direction of the bus bar 20', it is possible to make a tab array simple and to arrange the tabs efficiently. Thus, the array of mating terminals for connection to the tabs can also have a simple configuration.

Since the remaining features and operational effects of the second embodiment are generally the same as those of the first embodiment, their detailed explanation will be omitted here. However, the same reference signs have been given to elements of the second embodiment corresponding to elements of the first embodiment.

## Claims

1. An electrical junction box (10) comprising:
a casing (11, 12) ;
a connector housing socket (14, 15), said connector housing socket (14, 15) providing a recess at an exterior of said casing (11, 12) and having a substantially rectangular cross-section, said connector housing socket (14, 15) being adapted for receipt of a mating connector in use of the junction box;
an elongate terminal slot (14b, 15b), said terminal slot (14b, 15b), being provided in a bottom wall (14a, 15a) of said recess of said connector housing socket (14, 15);
an internal circuit, said internal circuit being located in said casing (14, 15), and said internal circuit being connected to a tab (22, 24) that projects through said terminal slot (14b, 15b) ;
**characterised in that**:
the length direction of said terminal slot (14b, 15b) is perpendicular to the elongation direction (Y) of said connector housing socket (14, 15).

2. An electrical junction box (10) according to claim 1, further comprising said mating connector (60) located in said connector housing socket (14, 15), and said mating connector comprising a terminal having an elongate slit, and a terminal chamber (61), said terminal being located in said terminal chamber (61), and said tab projecting through said slit, wherein the length direction of said terminal slit is perpendicular to the elongation direction (Y) of said connector housing socket (14, 15).

3. An electrical junction box (10) according to claim 2, wherein:
said connector housing socket (14, 15) is provided with a plurality of said terminal slots (14b, 15b), said terminal slots (14b, 15b) being juxtaposed and spaced from one another in a direction perpendicular to the elongation direction (Y) of said connector housing socket;
said internal circuit comprises a bus bar (20);
a plurality of said tabs (22, 24) extend from said bus bar (20) and project respectively through said terminal slots (14b, 15b),
said mating connector (60) comprises a plurality of said terminals and said terminal chambers (61),
wherein said tabs (22, 24) are connected to respective terminals of the mating connector.

4. An electrical junction box (10) according to claim 3, wherein:
said bus bar (20) is juxtaposed and fixed to said casing (11, 12), and lies in a plane perpendicular to said bottom wall (14a, 15a) of said connector housing socket (14, 15);
said tabs (22, 24) are spaced from one another and extend from upper and/or lower edges of a main base portion (23) of said bus bar (20); and
said tabs (22, 24) pass through said terminal slots (14b, 15b) without bending.

5. An electrical junction box (10) according to claim 4, wherein:
a plurality of said vertical bus bars (20) are juxtaposed in vertical planes in said casing in the elongation direction (Y) of said connector housing socket (14, 15), each of said bus bars being elongated in the direction perpendicular to the elongation direction (Y) of said connector housing socket (14, 15), the bus bars being secured, respectively, to a plurality of juxtaposed bus bar-containing chambers (13) ;
wherein a plurality of said connector housing sockets (14, 15) are juxtaposed in the elongation direction of the bus bars, each connector housing socket overlying a plurality of said bus bars (20); and
wherein terminals of a plurality of said mating connectors (60) located in said connector housing sockets (14, 15) are connected to one another via said bus bars (20).

6. An electrical junction box (10) according to claim 5, wherein:
corresponding tabs of adjacent bus bars are offset with respect to one another in the elongation direction of said bus bars; and
said terminal slots are positioned in rows, each row extending perpendicular to said elongation direction (Y) of said connector housing socket (14, 15), corresponding terminal slots (14b, 15b) of adjacent rows being offset with respect to one another in the direction perpendicular to said elongation direction (Y) of said connector housing sockets (14, 15).

7. An electrical junction box (10) according to claim 6, wherein:
said bus bars (20) each include a first tab (22A') and a second tab (22B'), said second tab (22B') being wider than said first tab (22A') such that it can carry higher currents than said first tab (22A') ; and
said terminal slots (14b-1') for said first tabs (22A') of said bus bars (20) are disposed at a pitch, on one side of said bottom wall of said connector housing socket, that is smaller than the pitch of said terminal slots (14b-2'), for said second tabs (22B') of said bus bars (20), disposed on the other side of said bottom wall of said connector housing socket (14').

8. An electrical junction box (10) according to any one of claims 3 to 7, wherein securing elements (25) are provided on said upper and/or lower edges of said bus bar (20), said bus bar (20) being fixed to said casing by said securing elements (25).

9. A method of forming a bus bar (20) for use in an electrical junction box (10) according to any one of claims 3 to 8, comprising the steps of:
punching a metal plate to form a plurality of juxtaposed bus bars (20), each bus bar being coupled at its ends respectively to first and second carrier portions (26A, 26B) formed from said metal plate, corresponding tabs (22, 24) of adjacent bus bars (20) being offset in the elongation direction of said bus bars (20) ;
cutting and removing each said bus bar (20) from said carrier portions (22A, 22B).

10. The method of forming a bus bar (20) according to claim 9, wherein
opposite ends of said bus bar (20) are coupled to said carrier portions (26A, 26B) via respective scored portions (27A, 27B);
the method further comprising the steps of:
inserting said first carrier portion (26A, 26B) into a groove (66) in a cutting tool (65) ;
tilting said bus bar (20), to separate said bus bar (20) from said first carrier portion (26A, 26B) ;
inserting the second carrier portion (26A, 26B) into said groove (66) ;
tilting said bus bar (20), to separate said bus bar from said second carrier portion (26A, 26B).
